# EUROPÄISCHE PATENTSCHRIFT

(11) **EP 2 473 764 B1**
(45) Veröffentlichungstag und Bekanntmachung des Hinweises auf die Patenterteilung: **18.07.2018**
(21) Anmeldenummer: 10745161.9
(22) Anmeldetag: 11.08.2010
(51) Int. Cl.: F16J 13/10, F16J 13/24

(54) **BEHÄLTER, INSBESONDERE DRUCKBEHÄLTER**
VESSEL, IN PARTICULAR PRESSURE VESSEL
RÉCIPIENT, NOTAMMENT RÉCIPIENT SOUS PRESSION

(30) Priorität: 04.09.2009 DE 102009040179
(43) Veröffentlichungstag der Anmeldung: 11.07.2012
(73) Patentinhaber: Hydac Process Technology GmbH, 66538 Neunkirchen (DE)
(72) Erfinder: LANG, Norbert, 66440 Blieskastel (DE); SCHLACHTER, Stefan, 66497 Contwig (DE)
(74) Vertreter: Bartels und Partner, Patentanwälte
(86) Internationale Anmeldenummer: PCT/EP2010/004894
(87) Internationale Veröffentlichungsnummer: WO 2011/026554

(56) Entgegenhaltungen:
- DE-A1- 4 205 867
- US-A- 2 743 032
- US-A- 4 625 754
- US-A- 4 986 502

## Beschreibung

Die Erfindung betrifft einen Behälter, insbesondere Druckbehälter, mit den Merkmalen im Oberbegriff von Anspruch 1.

Aus der DE 39 04 816 C2 ist ein Druckbehälter, insbesondere Druckfilterbehälter, bekannt, mit einem Deckel, der mit seinem Rand gegebenenfalls unter Zwischenlegung einer Scheibe auf den Behälterrand dicht aufpressbar ist mittels einer Presseinrichtung, die vom Druckbehälter aus mit ihren Enden über den Deckel greifende Klammern sowie ein diese axial anpressendes, betätigtes Kolben-Zylinder-System aufweist. Dadurch, dass bei der bekannten Lösung das Kolben-Zylinder-System aus einem hydraulisch oder pneumatisch betätigten Ringzylinder mit einem an dem Deckel nach oben gegen die Klammerenden verschiebbaren Ringkolben besteht, ist ein funktionssicherer Aufbau für die bekannte Druckbehälterlösung mit Presseinrichtung erreicht. Der Druckbehälter und insbesondere sein zugehöriges Verschlusssystem bauen jedoch komplex auf und eine Handhabung der Befestigungsklammern ist entsprechend zeitaufwendig.

Aus der DE 42 15 232 C2 ist ein Filter, insbesondere in Form eines Kraftstoff-Filters, bekannt, der für Flugzeug-Betankungsanlagen eingesetzt werden kann, mit einem Filtergehäuse mit wenigstens einem Einlauf- und einem Auslaufstutzen und einer dicht verschließbaren Öffnung zum Ein- und Ausbau von wenigstens einem das Filtergehäuse in zwei Innenräume aufteilenden Filtereinsatz, der mit seinem einen Ende an einer Montageplatte anliegt, wobei die Montageplatte ein Verschiebeelement aufweist, welches bei Fehlen oder falsch eingesetztem Filtereinsatz einen dichten Verschluss der Öffnung des Filtergehäuses verhindert. Ein Verschlussdeckel für den Filterraum ist mit Zentrierhilfen versehen, die einen Anbau des Verschlussdeckels in einer fehlerhaften Position verhindern. Ferner ist der Deckel mit Schrauben auf einen Dichtsitz in axialer Richtung gesehen gepresst.

Aus der US 4 625 754 geht ein Behälter, insbesondere Druckbehälter, hervor mit einem rohrförmigen Gehäuseteil, in dem ein Deckelteil festlegbar ist, wobei in einer Ausnehmung auf der Innenseite des Gehäuseteiles zumindest teilweise Anlagesegmente eingelegt sind, an denen sich das Deckelteil in seinem Einbauzustand abstützt, und wobei mindestens ein Festlegemittel vorgesehen ist, das einen lösbaren Eingriff zwischen Deckelteil und mindestens einem der Anlagesegmente gewährleistet, wobei das jeweilige Festlegemittel aus einer Festlegeschraube oder einem Festlegestift gebildet ist, die zumindest eines der Anlagesegmente durchgreift und die zumindest teilweise in eine zugeordnete Öffnung des Deckelteils eingreift. Die Schrauben weisen jeweils einen inneren Fluidkanal auf, um eine Druckentlastung zu ermöglichen, ehe die Schrauben vollständig aus dem Gewinde gedreht sind.

Die DE 42 05 867 A1 zeigt eine Verriegelungseinrichtung auf. Ein Deckel wird darin über formschlüssig eingreifende Haltestücke in Position gehalten. Die Haltestücke sind mit dem Deckel verschraubt.

Ausgehend von diesem Stand der Technik liegt der Erfindung die Aufgabe zugrunde, einen Behälter, insbesondere Druckbehälter, zu schaffen, der in funktionssicherer Weise ein Festlegen des Deckelteils an einem Gehäuseteil ermöglicht, wobei das Deckelteil mit wenigen Handgriffen in dem Gehäuseteil lösbar befestigt werden soll.

Eine dahingehende Aufgabe löst ein Behälter, insbesondere Druckbehälter, mit den Merkmalen des Patentanspruches 1 in seiner Gesamtheit.

Gemäß dem Kennzeichen von Anspruch 1 ist vorgesehen, dass im Deckelteil mindestens ein Drucksicherungselement eingesetzt ist, das, bei mindestens einer der jeweiligen Festlegeschrauben oder bei mindestens einem der jeweiligen Festlegestifte angeordnet, aus dem zuordenbaren Anlagesegment ein kontinuierliches Ablassen eines etwaig im Gehäuseteil vorhandenen Überdruckes gegenüber dem Umgebungsdruck erlaubt.

Dadurch, dass in einer Ausnehmung auf der Innenseite des Gehäuseteils zumindest teilweise Anlagesegmente eingelegt sind, an denen sich das Deckelteil in seinem Einbauzustand abstützt, und dass mindestens ein Festlegemittel vorgesehen ist, das einen lösbaren Eingriff zwischen Deckelteil und mindestens einem der Anlagesegmente gewährleistet, ist nach Einsetzen des Deckelteils in die zugehörige Ausnehmung des rohrförmigen Gehäuseteils mit wenigen Handgriffen ein Festlegen desselben im Gehäuseteil über die genannten Anlagesegmente möglich. Es ist für einen Durchschnittsfachmann auf dem Gebiet dahingehender Behälter überraschend, dass er dann unter Einsatz nur weniger Festlegemittel, gegebenenfalls unter Einsatz nur eines Festlegemittels, alle benötigten Anlagesegmente derart sicher mit dem Gehäuseteil verbindet, dass auch das Deckelteil sicher im Gehäuseteil aufgenommen ist. Der Auf- und Einbau der Anlagesegmente in das Gehäuseteil ergibt sich für eine Montage oder Bedienperson ohne weiteres, so dass ohne große technische Einführung der Behälter in Betrieb genommen werden kann. Auch müssen die Anlagesegmente nicht an genau definierten Einbaustellen in das Gehäuseteil eingebracht werden, sondern vielmehr ist ein beliebiger Einbau der Anlagesegmente entlang des Umfangsrandes des Gehäuseteils möglich, sofern darauf geachtet wird, dass eine vorgegebene Montagezuordnung zwischen Deckelteil und zugehörigem Anlagesegment veranlasst ist.

Um ein rasches Öffnen und Schließen des Behälters zu erreichen, ist ein dem inneren Anschlag gegenüberliegender äußerer Anschlag dadurch gebildet, dass eine radial verlaufende Ausnehmung in der Druckbehälterwand-Innenseite vorgesehen ist, in die zumindest zwei Anlagesegmente eingreifen, die auch auf der Deckelaußenseite im montierten Zustand des Druckbehälters aufliegen. Die Anlagesegmente sind beabstandet zueinander so angeordnet, dass der Deckel axial unverlierbar und ohne Kippen gehalten werden kann. Der auftretende Innendruck bei Betrieb des Druckbehälters drückt das Deckelteil gegen die insoweit Sicherungselemente ausbildenden Anlagesegmente und die hierbei auftretenden Kräfte werden über die Anlagesegmente und die Ausnehmung auf der Innenseite des Gehäuseteils in das Gehäuseteil sicher abgeleitet.

Für das Festlegen der Anlagesegmente innerhalb der Ausnehmung dienen Festlegemittel, wobei das jeweilige Festlegemittel aus einem Festlegestift oder einer Festlegeschraube gebildet sein kann, die zumindest eines der Anlagesegmente durchgreift, die zumindest teilweise in eine zugeordnete Öffnung des Deckelteils eingreifen, wobei zusätzlich oder alternativ vorgesehen sein kann, dass das jeweilige Festlegemittel zumindest teilweise aus der Ausnehmung auf der Innenseite des Gehäuseteils selbst gebildet ist. Insbesondere wenn auf der Innenseite der Ausnehmung diese in Richtung des äußeren Anschlages mit einer nach innen geneigten Anlagefläche versehen ist, ergibt sich insoweit eine zusätzliche Abstützung, die als Festlegemittel dient.

Bei einer besonders bevorzugten Ausführungsform der erfindungsgemäßen Lösung sind die Anlagesegmente als teilkreisförmige Streifensegmente ausgebildet und erstrecken sich in der Summe um den wesentlichen Umfang des Deckels. In vorteilhafter Weise sind dabei die Anlagesegmente derart ausgebildet, dass diese eine ungleiche tangentiale Erstreckung längs des Außenumfanges der Ausnehmung des Gehäuseteils einnehmen. Vorzugsweise sind dabei zwei kreisbogenförmige Anlagesegmente mit gleicher tangentialer Erstreckung vorhanden gegenüber einem dritten Anlagesegment mit dem gegenüber geringerer tangentialer Erstreckung. In der Summe ergibt sich mittels der drei Anlagesegmente jedoch eine tangentiale Erstreckung mit einem Bogenmaß von 360°.

Bei einer weiteren bevorzugten Ausführungsform der erfindungsgemäßen Behälterlösung ist vorgesehen, das Anlagesegment mit der geringeren tangentialen Erstreckung mittels nur eines einzigen Festlegemittels, vorzugsweise jedoch mit zwei Festlegemitteln innerhalb der Ausnehmung auf der Innenseite des Gehäuseteils festzulegen, wobei dann die beiden anderen weiteren Anlagesegmente ohne weitere Festlegemittel in Form eines Festlegestiftes oder einer Festlegeschraube auskommen können und nur über den Innenrand im Behälter in der Ausnehmung festgelegt sind. Dergestalt lässt sich mit nur wenigen Handhabungsgriffen das Anlagesegment mit dem jeweiligen Festlegemittel von diesem befreien und aus der Ausnehmung herausnehmen zwecks Abbau der weiteren Anlagesegmente und Herausnahme des Deckelteils. Dergestalt lässt sich beispielsweise ein im Druckbehälter bevorratetes Filterelement bei Verbrauch gegen ein Neuelement tauschen, sofern der erfindungsgemäße Druckbehälter als Druckfilterbehälter konzipiert sein sollte. Soll der Behälter nur als Tank dienen, können Festlegemittel, wie Festlegestifte oder Festlegeschrauben, entfallen und das Deckelteil kann ausschließlich über in die Ausnehmung eingesetzte Anlagesegmente in seiner Position gehalten werden. Die dahingehende Einbaumöglichkeit besteht, wenn im Inneren des Behälters bei montiertem Deckelteil über die Anlagesegmente kein oder nur ein geringer Überdruck gegenüber dem Umgebungsdruck herrscht.

Bei einer weiteren bevorzugten Ausführungsform des erfindungsgemäßen Behälters ist bei zumindest paarweise in die Ausnehmung des Gehäuseteils eingesetzten Anlagesegmenten das zuletzt einzusetzende Anlagesegment parallel zu den Stirnseiten der benachbart angeordneten Anlagesegmente in die Ausnehmung einschiebbar, so dass bei aufgestelltem Behälter in normaler Ausrichtung durch eine einfache Verfahrbewegung in horizontaler Richtung das Deckelteil festgelegt und wieder gelöst werden kann.
Bei einer weiteren bevorzugten Ausführungsform des erfindungsgemäßen Behälters ist zwischen benachbarten Stirnseiten zweier angrenzender Anlagesegmente mindestens ein Distanz- und/oder Positionierelement einsetzbar, das vorzugsweise aus einem Blechstreifen besteht. Mittels des dahingehenden Elementes lassen sich Fertigungstoleranzen ausgleichen, um dennoch in funktionssicherer Weise den Behälter mit seinem Deckelteil auf- und abbauen zu können. Durch die Merkmale des kennzeichneiden Teils des Patentanspruches 1 wird die Bediensicherheit für das Bedien- oder Montagepersonal erhöht, welches nicht befürchten muss, dass unter hohem Druck stehende Festlegemittel ihnen bei der Demontage des Deckelteils ungewollt entgegenkommen, was ansonsten zu einer erheblichen Verletzungsgefahr führen könnte.
Vorzugsweise ist ferner vorgesehen, dass das Deckelteil des Behälters im Bereich seiner außenumfangsseitigen Anlage mit dem Gehäuseteil mindestens eine Dichteinrichtung aufweist. Das Deckelteil kann insoweit an einem Innenabsatz des Gehäuseteils abstützend entlang der Innenumfangsseite des Gehäuseteils in abdichtender Weise geführt sein.
Es zeigen in prinzipieller und nicht maßstäblicher Darstellung die
- Fig. 1: eine perspektivische Draufsicht auf den Behälter mit eingesetztem Deckelteil nebst Anlagesegmenten;
- Fig. 2: eine Draufsicht auf den Behälter nach der Fig. 1; und
- Fig. 3 bis 5: Querschnittdarstellungen durch den oberen Bereich des Behälters entlang der Schnittlinie I-I von Fig. 2.

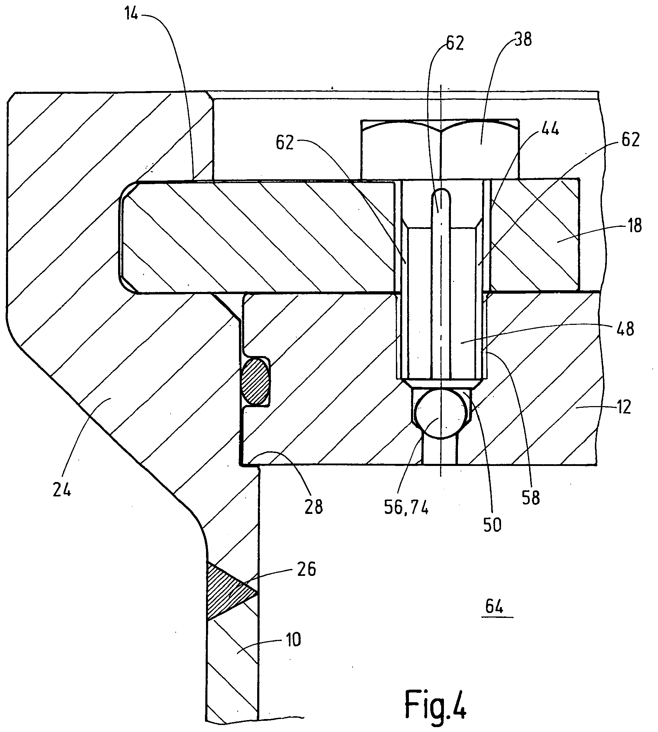

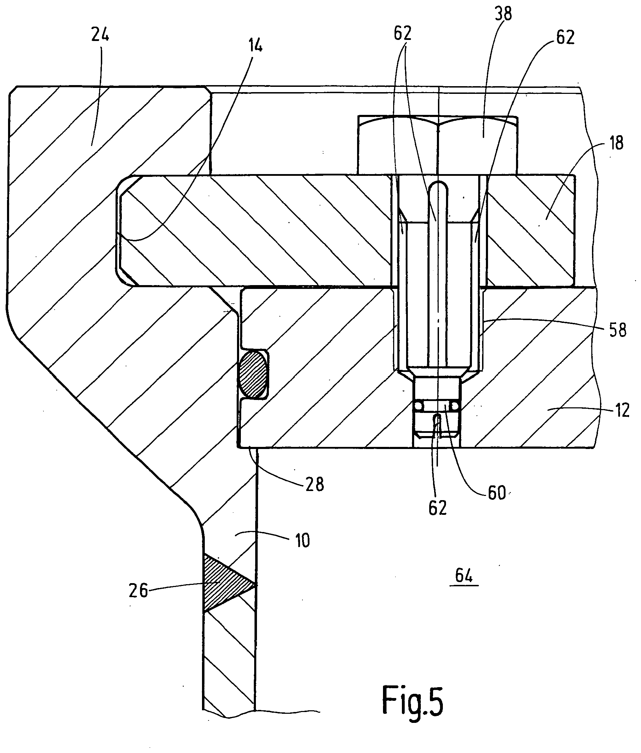

Die Ausführungsformen der Fig. 4 und 5 dienen lediglich der Erläuterung des Hintergrundes der Erfindung und sind nicht Gegenstand eines Anspruches.

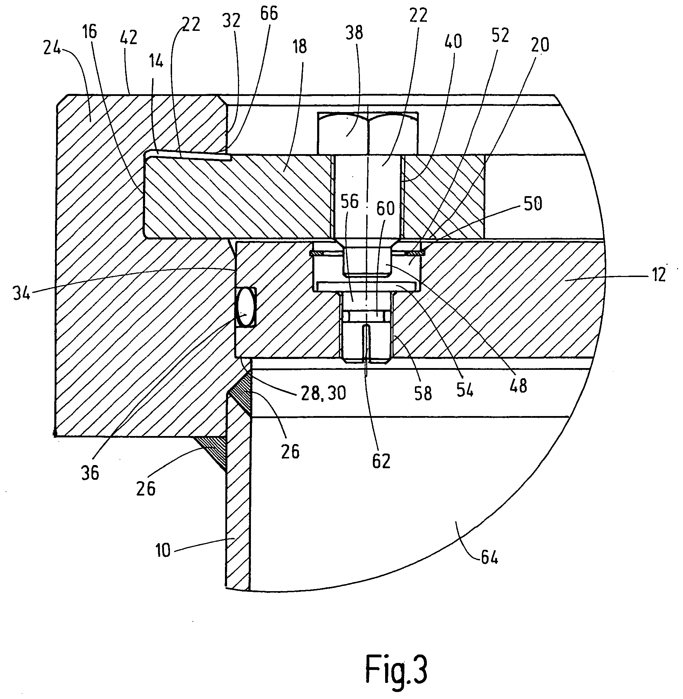

Der Behälter, insbesondere Druckbehälter, weist ein rohrförmiges Gehäuseteil 10 auf, indem eine Deckelteil 12 festlegbar ist, wobei in einer ringförmigen Ausnehmung 14 auf der Innenseite 16 des Gehäuseteiles 10 zumindest teilweise Anlagesegmente 18 eingelegt sind (vgl. Schnittdarstellung nach der Fig. 3), an denen sich das Deckelteil 12 in seinem in der Fig. 3 gezeigten Einbauzustand mit Teilen seiner Oberseite 20 abstützt. Ferner ist mindestens ein Festlegemittel 22 vorgesehen, das einen lösbaren Eingriff zwischen Deckelteil 12 und mindestens einem der Anlagesegmente 18 gewährleistet.

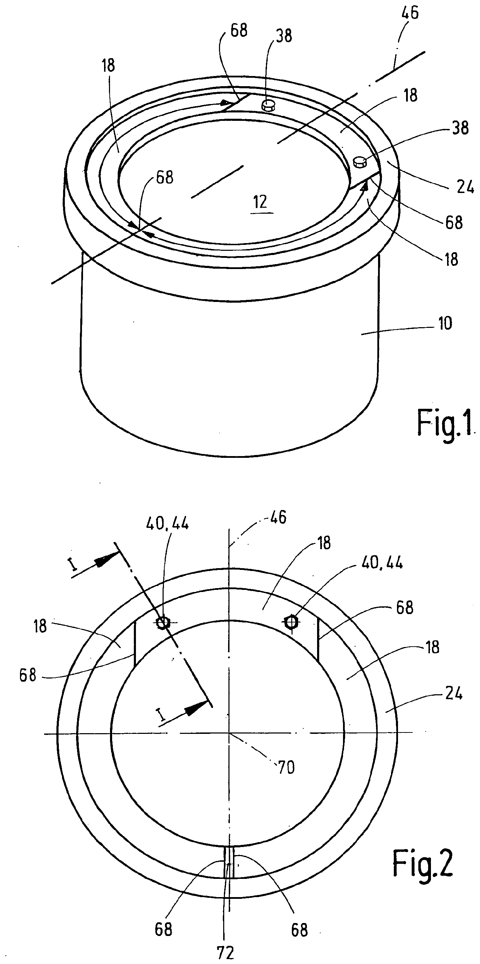

Wie sich insbesondere aus den Fig. 1 und 2 ergibt, sind die Anlagesegmente 18 kreisbogenförmig mit rechteckförmigem Querschnitt ausgestaltet, wobei jeweils benachbarte Anlagesegmente 18 stirnseitig aneinander angrenzen. Wie sich weiter aus der Fig. 3 ergibt, weist das rohrförmige Gehäuseteil 10 zu seinem oberen freien Rand hin eine Randverbreiterung 24 auf, die nach außen und innen hin über umlaufende Kehlschweißnähte 26 in abdichtender Weise mit dem ansonsten dünnwandig ausgebildeten zylindrischen Gehäuseteil 10 verbunden ist. An der Stelle der zuinnerst liegenden Kehlschweißnaht 26 und unmittelbar darüberliegend angeordnet, ist innerhalb der Randverbreiterung 24 ein sich nach außen hin verbreiternder Absatz 28 vorhanden, an dem sich das Deckelteil 12 mit Teilen der Unterseite 30 des Deckelteiles 12 abstützt. Ferner ist zwischen der Innenwand 32 der Randverbreiterung 24 und der zylindrischen Außenwand 34 des Deckelteils 12 eine Dichteinrichtung 36 vorgesehen, die vorzugsweise als gekammerter O-Dichtring in einer entsprechenden Aufnahmenut im Deckelteil 12 aufgenommen ist.

Bei der Ausführungsform nach der Fig. 3 kann das Festlegemittel 22 aus einer Art Festlegstift oder Festlegeschraube 38 gebildet sein, die im eingesetzten Zustand in einem Innengewinde 40 des Anlagesegmentes 18 geführt ist, wobei der Schraubenkopf der Festlegeschraube 38 im eingesetzten Zustand jedenfalls unter der obigen Randbegrenzung, gebildet durch die Oberseite 42 der Randverbreiterung 24 verbleibt, um dergestalt gegenüber Beschädigungen geschützt zu sein und um insbesondere ein ungewolltes Lösen der Festlegeschraube 38 vermeiden zu helfen. In Blickrichtung auf die Fig. 2 gesehen, ist dort der einfacheren Darstellung wegen, das Festlegemittel 22 nicht eingezeichnet, sondern vielmehr nur die Bohrungen 44 nebst zugehöriger Innengewindestrecke 40.

Werden die beiden äußeren Anlagesegmente 18 in die ringförmige Ausnehmung 14 eingesetzt und in Position gebracht, kann zuletzt das mittlere Anlagesegment 18 eingesetzt werden durch Längsverfahren entlang einer mittleren Verschiebeachse 46, wobei die jeweiligen Anlagesegmente 18 dann in der Ausnehmung 14 als Bestandteil der Festlegemittel 22 selbsthaltend eingesetzt sind. Der vor Einsetzen der jeweiligen Anlagesegmente 18 bereits eingebrachte Deckelteil 12 muss dann aber relativ in eine Position zu den Anlagesegmenten 18 derart verbracht werden, dass jedenfalls das Festlegemittel 22 in Form der Festlegeschraube 38 oder eines Festlegestiftes gemäss der Darstellung nach der Fig. 3 mit seinem unteren freien Ende 48 in eine demgegenüber verbreiterte Ringausnehmung 50 fluchtend eingreifen kann, die mit ihrem oberen freien Ende aus dem Deckelteil 12 austritt und im Montagezustand des Deckelteils 12 gemäss der Darstellung nach der Fig. 3 nach oben hin von der unteren Anlagewand des zugeordneten Anlagesegmentes 18 begrenzt ist.

In diese Ringausnehmung 50 ist ein Sicherungselement 52 eingesetzt, das, beispielsweise in der Art eines Sprengringes ausgebildet, mit Sicherungselementteilen vom Deckelteil 12 gehalten, mit einem vorgebbaren Überstand in die Ringausnehmung 50 hineinragt. Nach unten hin ist die Ringausnehmung 50 von einer Anlageplatte 54 verschlossen, die vorzugsweise einstückiger Bestandteil eines Drucksicherungselementes 56 ist, das in der Art eines Einschraubinserts, beispielsweise über eine nicht näher dargestellte Innensechskantschraube, im Bereich der oberen Mitte der Anlageplatte 54 in ein Innengewinde 58 des Deckelteils 12 einschraubbar ist, wobei die insertartige Drucksicherungseinrichtung 56 im Mittenbereich eine umlaufende Druckführungsnut 60 aufweist, in die mindestens ein Druckkanal 62 einmündet, wobei die dahingehende Einmündungsstelle auch über einen Zwischensteg partiell unterbrochen sein kann.

Die genannte Drucksicherungseinrichtung 56 dient dazu bei Ausbau des Deckelteils 12 eine Druckentlastung des Behälterinneren 64 gegenüber der Umgebung herstellen zu können, sofern mittels Entfernen des jeweiligen Festlegemittels 22 in Form der jeweiligen Festlegeschraube 38 das Deckelteil 12 sich dann nur noch an den Anlagesegmenten 18 ausschließlich abstützt, die insoweit von der Ausnehmung 14 innerhalb der Randverbreiterung 24 als verbleibendes Festlegemittel 22 gehalten sind. Insoweit wird über die genannte Innensechskantschraube die Anlageplatte 54, mit dem sich anschließenden Eingriffszapfen aus dem Innengewinde 58 herausgeschraubt mit der Folge, dass der im Behälterinneren 64 herrschende Überdruck über den Druckkanal 62 und die Druckführungsnut 60 in die Umgebung über die jeweiligen Bohrungen 44 im Anlagesegment 18 entweichen kann, wobei für die dahingehende Druckführung die Anlageplatte 54 im Durchmesser etwas geringer gewählt ist, als der Durchmesser der Ringausnehmung 50.

Ist das Insert in Form des Drucksicherungselementes 56 eingesetzt, kann anstelle der Festlegeschraube 38 ein nicht näher dargestellter Festlegestift treten, der ohne Gewindeverbindung über die Bohrung 44 des Anlagesegmentes 18 in die Ringausnehmung 50 im Deckelteil 12 eingreift. Wird die Festlegeschraube 38 verwendet, kann das insertartige Drucksicherungselement 56 ohne Gewindeeingriff lose im Deckelteil 12 geführt sein, da es in jedem Fall von dem Sicherungselement 52 gehalten ist. Sobald das Behälterinnere 64 in diesem Sinne druckentlüftet ist, ist eine Entnahme der Anlagesegmente 18 aus der Ausnehmung 14 im Gehäuseteil 10 möglich, mit anschließender axialer Herausnahme des Deckelteils 12 aus dem Gehäuseteil 10 über dessen Randverbreiterung 24.

Ein dahingehender Ausbau des Deckelteils 12 kann beispielsweise zu Inspektionszwecken des Behälterinneren 64 notwendig sein oder wenn der Behälter einen Filter (nicht dargestellt) aufnimmt, der im Verschmutzungsfall bedarfsweise gegen ein Neuelement zu tauschen ist. Der gezeigte Behälter kann aber auch, als einfache Tankeinrichtung ausgeführt, mit Entnahme des Deckelteils 12 von Verschmutzungen abgereinigt werden. Steht das Behälterinnere 64 jedenfalls unter Druck, beispielsweise in dem über nicht näher dargestellte Zu- und Abflüsse, die in das Gehäuseteil 10 münden ein Druck aufgebaut wird, wird vom Behälterinneren 64 her das Deckelteil 12 gegen die Anlagesegmente 18 von der Unterseite herangedrückt, so dass im Bereich der Anlage es zu einem dichtenden Abschluss des Behälterinneren 64 gegenüber der Umgebung kommt, wozu auch die bereits erwähnte Dichteinrichtung 36 mit beiträgt.

Um eine entsprechend gute Zentrierung der Anlagesegmente 18 innerhalb der Ausnehmung 14 zu erreichen, ist die Randverbreiterung 24 des Gehäuseteils 12 in dem Bereich, in dem die Randverbreiterung 24 ins Freie mündet, nebst dem jeweils einsetzbaren Anlagesegment 18 in diesem Bereich mit einer Einlaufschräge 66 versehen, die als Zentrier- und Abstützhilfe dient und eine Art Klemmkanal begrenzt, die ein ungewolltes Ausheben der Anlagesegmente 18 aus ihrer Ausnehmung 14 vermeiden hilft, sobald das Behälterinnere 64 unter einem entsprechenden Druck steht.

Damit die einzelnen Anlagesegmente 18 eine gemeinsame Anschlagbegrenzung innerhalb des Gehäuseteiles 10 bilden können, an der sich das Deckelteil 12 abstützt, ist vorgesehen, dass die Stirnseiten 68 der Anlagesegmente 18 parallel zu einer der mittleren Achsen als Verschiebeachse 46 des Deckelteils 12 verlaufen, die wiederum senkrecht zu der Längsachse 70 des Gehäuseteils 10 angeordnet ist. Um Überbestimmungen zu vermeiden und um sicherzustellen, dass etwaige Übertoleranzen einen systemgerechten Einbau der Anlagesegmente 18 in der Ausnehmung 14 verhindern, ist vorgesehen, dass zumindest zwischen zwei Anlagesegmenten 18 ein Distanz- und /oder Positionierelement 72 eingesetzt ist, das vorzugsweise aus einem Blechstreifen in der Art einer Federkomponente (vgl. Fig. 2) ausgebildet sein kann.

Die Ausführungsformen nach den Fig. 4 und 5 werden nur noch insofern erläutert, als sie sich wesentlich von dem Ausführungsbeispiel nach den vorstehend genannten Figuren unterscheiden. Dabei werden dieselben Bauteile mit denselben Bezugszeichen versehen und die insoweit hierzu getroffenen Ausführungen gelten auch für die geänderten Ausführungsformen nach den Fig. 4 und 5.

Bei der Ausführungsform nach den Fig. 4 und 5 wird als Festlegeschraube 38 eine Durchgriffsschraube vorgesehen, die diesmal die Bohrung 44 ohne Innengewinde im zugeordneten Anlagesegment 18 durchgreift, wobei die Festlegeschraube 38 mit ihrem freien Ende 48 entlang des Innengewindes 58 im Deckelteil 12 geführt ist und als Drucksicherungseinrichtung 56 dient, diesmal eine Art Rückschlagkugel 74, die in der Ringausnehmung 50 im Deckelteil 12 gehalten ist. Der jeweilige Druckkanal 62 ist nun innerhalb des Längsschaftes der Festlegeschraube 38 geführt und, wird für einen Demontagevorgang die Festlegeschraube 38 herausgedreht, gibt die Rückschlagkugel 74 das Behälterinnere 64 gegenüber der Umgebung über die Ringausnehmung 50 und den jeweiligen Druckkanal 62 frei, ohne ungewollt ins Freie austreten zu können.

Die Ausführungsform der Fig. 5 ist gegenüber der Fig. 4 dahingehend geändert, dass anstelle der Rückschlagkugel 74 als Drucksicherungseinrichtung 56 das insertartige ausgebildete Drucksicherungselement 56 nach der Fig. 3 tritt, welches diesmal unter Weglassen der Anlageplatte 54 direkt einstückig mit seiner Oberseite mit dem unteren freien Ende 48 der Festlegeschraube 38 verbunden ist. Auch bei der dahingehend geänderten Ausführungsform wird mit Herausdrehen der Festlegeschraube der Druckkanal 62 im Insert über den Ringkanal als Druckführungsnut 60 mit den weiteren axial verlaufenden Druckkanälen 62 innerhalb der Festlegeschraube medienführend verbunden, um dergestalt eine Druckentlastung des Behälterinneren 64 gegenüber der Umgebung zu erreichen.

In Übereinstimmung mit der Lösung nach der Fig. 5 braucht auch das insertartige Sicherungselement 56 nach der Fig. 3 keine Gewindeverbindung mit dem Deckelteil 12 einzugehen; vielmehr genügt es, wenn drucksperrend das dahingehende Drucksicherungselement 56 mit seiner Anlageplatte 54 sich an der Unterseite 48 der Festlegeschraube 38 abstützen kann, sofern diese im benachbarten Anlagesegment 18 eingeschraubt ist. In der dahingehend druckbedingt angehobenen Situation für das Drucksicherungselement 56, muss die Druckführungsnut 60 sowie der Druckkanal 62 aber derart geführt sein, dass es nicht ungewollt zu einer Druckentlastung auf der Behälterinnenseite 64 kommt. Ist wiederum, wie beschrieben, die Drucksicherungseinrichtung 56 im Deckelteil 12 eingeschraubt, kann es auch genügen, anstelle der Festlegeschraube 38 einen einfachen Festlegestift zu setzen, um beispielsweise die Position der eingesetzten Drucksicherungseinrichtung 56 im Deckelteil 12 gegenüber einer Bedienperson darzutun. Bei einer bevorzugten Ausführungsform des erfindungsgemäßen Behälters ist vorgesehen, jedes der Anlagesegmente 18 mit mindestens einer Festlegeschraube 38 zu versehen, um dergestalt in jedem Fall eine Fehlmontage auszuschließen, was insbesondere dann eine Rolle spielt, wenn unter erhöhten Sicherheitsaspekten der Schnellverschluss für Druckbehälter zur Anwendung kommt.

## Patentansprüche

1. Behälter, insbesondere Druckbehälter, mit einem rohrförmigen Gehäuseteil (10) und einem Deckelteil (12), wobei das Deckelteil (12) in dem Gehäuseteil (10) festlegbar ist, wobei in einer Ausnehmung (14) auf der Innenseite (16) des Gehäuseteiles (10) zumindest teilweise Anlagesegmente (18) eingelegt sind, an denen sich das Deckelteil (12) in seinem Einbauzustand abstützt, und wobei mindestens ein Festlegemittel (22) vorgesehen ist, das einen lösbaren Eingriff zwischen Deckelteil (12) und mindestens einem der Anlagesegmente (18) gewährleistet, wobei das jeweilige Festlegemittel (22) aus einer Festlegeschraube (38) oder einem Festlegestift gebildet ist, die zumindest eines der Anlagesegmente (18) durchgreift und die zumindest teilweise in eine zugeordnete Öffnung (50) des Deckelteils (12) eingreift, **dadurch gekennzeichnet, dass** in der zugeordneten Öffnung (50) des Deckelteils (12) mindestens ein Drucksicherungselement (56) eingesetzt ist, das, bei mindestens einer der jeweiligen Festlegeschrauben (38) oder bei mindestens einem der jeweiligen Festlegestifte angeordnet, aus dem zuordenbaren Anlagesegment (18) ein kontinuierliches Ablassen eines etwaig im Gehäuseteil (10) vorhandenen Überdruckes gegenüber dem Umgebungsdruck erlaubt.

2. Behälter nach Anspruch 1, **dadurch gekennzeichnet, dass** die Anlagesegmente (18) kreisbogenförmig ausgestaltet sind.

3. Behälter nach Anspruch 1 oder 2, **dadurch gekennzeichnet, dass** benachbarte Anlagesegmente (18) stirnseitig aneinander angrenzen.

4. Behälter nach einem der Ansprüche 1 bis 3, **dadurch gekennzeichnet, dass** die Anlagesegmente (18) eine gemeinsame Anschlagbegrenzung innerhalb des Gehäuseteils (10) bilden, an der sich das Deckelteil (12) abstützt.

5. Behälter nach einem der Ansprüche 1 bis 4, **dadurch gekennzeichnet, dass** die Stirnseiten (68) der Anlagesegmente (18) parallel zu einer der mittleren Achsen (46) des Deckelteils (12) verlaufen, die senkrecht zu der Längsachse (70) des Gehäuseteils (10) angeordnet sind.

6. Behälter nach Anspruch 5, **dadurch gekennzeichnet, dass** bei zumindest paarweise in die Ausnehmung (14) des Gehäuseteils (10) eingesetzten Anlagesegmenten (18) das zuletzt einzusetzende Anlagesegment (18) parallel zu den Stirnseiten (68) der benachbart angeordneten Anlagesegmente (18) in die Ausnehmung (14) einschiebbar ist.

7. Behälter nach einem der Ansprüche 1 bis 6, **dadurch gekennzeichnet, dass** die in die Ausnehmung (14) im Gehäuseteil (10) eingesetzten Anlagesegmente (18) einen im Wesentlichen geschlossenen Anlagering für die Anlage des Deckelteils (12) bilden.

8. Behälter nach einem der Ansprüche 2 bis 7, **dadurch gekennzeichnet, dass** zwischen benachbarten Stirnseiten (68) zweier angrenzender Anlagesegmente (18) mindestens ein Distanz- und/oder Positionierelement (72) einsetzbar ist, das vorzugsweise aus einem Blechstreifen besteht.

9. Behälter nach einem der Ansprüche 1 bis 8, **dadurch gekennzeichnet, dass** in dem Bereich, in den das Gehäuseteil (10) ins Freie mündet, die Ausnehmung (14) und/oder das jeweils einsetzbare Anlagesegment (18) mit einer Einlaufschräge (66) versehen ist, die als Zentrier- und Abstützhilfe dient.

10. Behälter nach einem der Ansprüche 1 bis 9, **dadurch gekennzeichnet, dass** das Deckelteil (12) im Bereich seiner außenumfangsseitigen Anlage (34) mit dem Gehäuseteil (10) mindestens eine Dichteinrichtung (36) aufweist.

## Claims

1. A vessel, in particular a pressure vessel, having a tubular housing part (10) and a cover part (12), the cover part (12) being able to be secured within the housing part (10), contact segments (18) being inserted at least partially in a recess (14) on the inside (16) of the housing part (10), against which contact segments the cover part (12) is supported in its installed state, and at least one securing means (22) being provided which guarantees a detachable engagement between the cover part (12) and at least one of the contact segments (18), the respective securing means (22) being formed from a securing screw (38) or a securing pin which extends through at least one of the contact segments (18) and which engages at least partially in an assigned opening (50) of the cover part (12), **characterised in that** at least one pressure relief element (56) is inserted in the assigned opening (50) of the cover part (12), which pressure relief element, arranged on at least one of the respective securing screws (38) or on at least one of the respective securing pins, allows a continuous release of any overpressure that may prevail in the housing part (10) relative to the ambient pressure from the assignable contact segment (18).

2. The vessel according to Claim 1, **characterised in that** the contact segments (18) are made to have a circular arc shape.

3. The vessel according to Claim 1 or 2, **characterised in that** adjacent contact segments (18) abut each other at the end face.

4. The vessel according to any of Claims 1 to 3, **characterised in that** the contact segments (18) form a common end stop limiter inside the housing part (10) on which the cover part (12) is supported.

5. The vessel according to any of Claims 1 to 4, **characterised in that** the end faces (68) of the contact segments (18) run parallel to one of the central axes (46) of the cover part (12), which central axes are arranged perpendicular to the longitudinal axis (70) of the housing part (10).

6. The vessel according to Claim 5, **characterised in that** when the contact segments (18) are inserted at least in pairs into the recess (14) of the housing part (10), the contact segment (18) that is to be inserted last can be inserted into the recess (14) in parallel to the end faces (68) of the adjacently arranged contact segments (18).

7. The vessel according to any of Claims 1 to 6, **characterised in that** the contact segments (18) that are inserted into the recess (14) in the housing part (10) form an essentially closed contact ring for the engagement of the cover part (12).

8. The vessel according to any of Claims 2 to 7, **characterised in that** at least one spacing and/or positioning element (72), which is preferably made of a sheet metal strip, can be inserted between adjacent end faces (68) of two abutting contact segments (18).

9. The vessel according to any of Claims 1 to 8, **characterised in that** in the region in which the housing part (10) opens to the outside, the recess (14) and/or the respective contact segment (18) that can be inserted is provided with an inlet slope (66) that serves as a centering and supporting aid.

10. The vessel according to any of Claims 1 to 9, **characterised in that** the cover part (12) has at least one sealing device (36) in the region of said cover part's outer circumferential engagement (34) with the housing part (10).

## Revendications

1. Récipient, notamment récipient tenant la pression, comprenant un corps (10) tubulaire et un couvercle (12), le couvercle (12) pouvant être fixé dans le corps (10), dans lequel, dans un évidement (14) du côté (16) intérieur du corps (10), peuvent être insérés, au moins en partie, des segments (18) d'appui, sur lesquels le couvercle (12) s'appuie dans son état monté, et dans lequel il est prévu au moins un moyen (22) de fixation, qui assure une prise amovible entre le couvercle (12) et au moins l'un des segments (18) d'appui, le moyen (22) de fixation étant formé d'une vis (38) de fixation ou d'une broche de fixation, qui traverse au moins l'un des segments (18) d'appui et qui pénètre, au moins en partie, dans une ouverture (50) associée du couvercle (12), **caractérisé en ce que**, dans l'ouverture (50) associée du couvercle (12), est inséré au moins un élément (56) de maintien de la pression, qui, disposé dans au moins l'une des vis (38) de fixation ou dans au moins l'une des broches de fixation, assure, à partir du segment (18) d'appui pouvant être associé, une évacuation continue d'une surpression éventuellement présente dans le corps (10) par rapport à la pression atmosphérique.

2. Récipient suivant la revendication 1, **caractérisé en ce que** les segments (18) d'appui sont en forme d'arc de cercle.

3. Récipient suivant la revendication 1 ou 2, **caractérisé en ce que** des segments (18) d'appui voisins sont contigus du côté frontal.

4. Récipient suivant l'une des revendications 1 à 3, **caractérisé en ce que** les segments (18) d'appui forment une limitation commune de butée dans le corps (10), sur laquelle le couvercle (12) s'appuie.

5. Récipient suivant l'une des revendications 1 à 4, **caractérisé en ce que** les côtés (68) frontaux des segments (18) d'appui s'étendent parallèlement à l'un des axes (46) médians du couvercle (12), qui sont perpendiculaires à l'axe (70) longitudinal du corps (10).

6. Récipient suivant la revendication 5, **caractérisé en ce que**, pour des segments (18) d'appui insérés au moins par paire dans l'évidement (14) du corps (10), le segment (18) d'appui inséré en dernier peut être inséré dans l'évidement (14) parallèlement aux côtés (68) frontaux des segments (18) d'appui voisins.

7. Récipient suivant l'une des revendications 1 à 6, **caractérisé en ce que** les segments (18) d'appui insérés dans l'évidement (14) du corps (10) forment un anneau d'appui sensiblement fermé pour l'appui du couvercle (12).

8. Récipient suivant l'une des revendications 2 à 7, **caractérisé en ce qu'**entre des côtés (68) frontaux voisins de deux segments (18) d'appui contigus, peut être inséré au moins un élément (72) d'intercalation et/ou de mise en position, constitué de préférence d'une bande de tôle.

9. Récipient suivant l'une des revendications 1 à 8, **caractérisé en ce que**, dans la partie dans laquelle le corps (10) débouche à l'air libre, l'évidement (14) et/ou le segment (18) d'appui, qui peut être inséré, est pourvu d'un biseau (66) d'entrée, qui sert à faciliter le centrage et l'appui.

10. Récipient suivant l'une des revendications 1 à 9, **caractérisé en ce que** le couvercle (12) a, dans la partie de son appui (34) du côté du pourtour extérieur avec le corps (10), au moins un dispositif (36) d'étanchéité.
